# EUROPÄISCHE PATENTANMELDUNG

(11) **EP 4 488 096 A1**
(43) Veröffentlichungstag der Anmeldung: **08.01.2025**
(21) Anmeldenummer: 24180421.0
(22) Anmeldetag: 06.06.2024
(51) Int. Cl.: B60K 35/10, B60K 35/21, G05G 1/10, H01H 19/02

(54) **INTERIEUREINRICHTUNG FÜR EINEN INNENRAUM EINES KRAFTFAHRZEUGS SOWIE KRAFTFAHRZEUG**

(30) Priorität: 05.07.2023 DE 102023206386
(71) Anmelder: VOLKSWAGEN AG, 38440 Wolfsburg (DE)
(72) Erfinder: Huwer, Wojciech, 38110 Braunschweig (DE); Thiele, Henning, 38440 Wolfsburg (DE)

(57) **Zusammenfassung**

Die Erfindung betrifft eine Interieureinrichtung für einen Innenraum eines Kraftfahrzeugs, mit einem zum Leiten von Licht ausgebildeten Lichtleiter (3), welcher eine Sichtseite (4) und eine der Sichtseite (4) gegenüberliegende Rückseite (5) aufweist, wobei bei bestimmungsgemäßer Einbaulage der Interieureinrichtung über die Sichtseite (4) Licht aus dem Lichtleiter (3) ausgekoppelt wird und die Sichtseite (4) des Lichtleiters (3) im Innenraum sichtbar ist, wobei der Lichtleiter (3) an der Rückseite (5) wenigstens ein Befestigungselement (7) aufweist, durch dessen Struktur ein an der Sichtseite (4) ausgekoppeltes Lichtmuster vorgegeben ist, und einer Kraftfahrzeugkomponente, an welcher der Lichtleiter (3) über das Befestigungselement (7) gehalten ist.

## Beschreibung

Die vorliegende Erfindung betrifft eine Interieureinrichtung für einen Innenraum eines Kraftfahrzeugs sowie ein Kraftfahrzeug.

Aus der DE 10 2020 113 260 A1 ist eine Umgebungslichtvorrichtung für eine Wählrad-Schaltvorrichtung bekannt. Diese Umgebungslichtvorrichtung umfasst eine gedruckte Leiterplatte, die mit einem Hauptgehäuse gekuppelt ist. Weiterhin umfasst die Umgebungslichtvorrichtung eine Lichtquelle, die an der Leiterplatte fixiert ist, und eine Lichtführung, die mit dem Hauptgehäuse gekuppelt ist und derart konfiguriert ist, dass sie Licht von der Lichtquelle abgibt. Weiterhin umfasst die Umgebungslichtvorrichtung einen lichtemittierenden Mechanismus, der in einem Schaltwählrad, das in Bezug auf das Hauptgehäuse drehbar gekuppelt ist, vorgesehen ist und derart konfiguriert ist, dass er das Licht von der Lichtquelle, das über die Lichtführung abgegeben wird, reflektiert, um es außerhalb des Schaltwählrads in eine Umgebungslichtform zu emittieren.

Weiterhin ist aus der CN 114060502 A eine elektronische Gangschaltungsvorrichtung offenbart, mit einer Knopfbaugruppe.

Weiterhin ist aus der FR 2 835 961 B1 ein Bedienelement für ein Kraftfahrzeug bekannt, welches einen drehbaren Griff mit einem Anzeigefenster aufweist, das über einen mit Lichtquellen verbundenen Lichtwellenleiter beleuchtbar ist. Das Anzeigefenster wird in einem ersten Winkelabschnitt des Griffs mit Licht einer ersten Farbe und in einem zweiten Winkelabschnitt mit Licht einer zweiten Farbe beleuchtet.

Aufgabe der vorliegenden Erfindung ist es, eine Lösung zu schaffen, welche eine besonders einfache Anordnung eines Lichtleiters in einem Innenraum eines Kraftwagens ermöglicht.

Diese Aufgabe wird erfindungsgemäß durch die Gegenstände der unabhängigen Ansprüche gelöst. Weitere mögliche Ausgestaltungen der Erfindung sind in den Unteransprüchen, der Beschreibung und den Figuren offenbart. Merkmale, Vorteile und mögliche Ausgestaltungen, die im Rahmen der Beschreibung für einen der Gegenstände der unabhängigen Ansprüche dargelegt sind, sind zumindest analog als Merkmale, Vorteile und mögliche Ausgestaltungen des jeweiligen Gegenstands der anderen unabhängigen Ansprüche sowie jeder möglichen Kombination der Gegenstände der unabhängigen Ansprüche, gegebenenfalls in Verbindung mit einem oder mehr der Unteransprüche, anzusehen.

Die Erfindung betrifft eine Interieureinrichtung für einen Innenraum eines Kraftfahrzeugs, insbesondere eines Kraftwagens, insbesondere eines Personenkraftwagens. Die Interieureinrichtung ist somit dazu eingerichtet, in einem Innenraum des Kraftfahrzeugs angeordnet zu werden. Hierbei ist die Interieureinrichtung zumindest bereichsweise im Innenraum des Kraftfahrzeugs sichtbar. Die Interieureinrichtung umfasst einen zum Leiten von Licht ausgebildeten Lichtleiter. Als Lichtleiter werden transparente Bauteile wie Fasern, Röhren oder Stäbe bezeichnet, die Licht über kurze oder lange Strecken transportieren. Der Lichtleiter weist eine Sichtseite und eine der Sichtseite gegenüberliegende Rückseite auf. Bei bestimmungsgemäßer Einbaulage der Interieureinrichtung im Innenraum des Kraftfahrzeugs wird über die Sichtseite Licht aus dem Lichtleiter ausgekoppelt. Weiterhin ist bei bestimmungsgemäßer Einbaulage die Sichtseite des Lichtleiters im Innenraum sichtbar. Es ist somit nicht vorgesehen, dass das von dem Lichtleiter ausgesendete Licht lediglich über Reflexion an einer Oberfläche im Kraftfahrzeug in Augen von Fahrzeuginsassen des Kraftfahrzeugs gelangen kann. Stattdessen ist es vorgesehen, dass das aus dem Lichtleiter über die Sichtseite ausgekoppelte Licht im Kraftfahrzeug unmittelbar und somit ohne weitere Reflexionsschritte in Augen von auf jeweiligen Fahrzeugsitzen angeordnete Fahrzeuginsassen treffen kann. Es ist vorgesehen, dass der Lichtleiter an der Rückseite wenigstens ein Befestigungselement aufweist, durch dessen Struktur ein an der Sichtseite ausgekoppeltes Lichtmuster vorgegeben ist.

Die Interieureinrichtung umfasst des Weiteren eine Kraftfahrzeugkomponente, an welcher der Lichtleiter über das Befestigungselement gehalten ist. Das bedeutet, dass die Kraftfahrzeugkomponente der Halterung des Lichtleiters dient. Je nach Ausgestaltung des wenigstens einen Befestigungselements wird das Befestigungselement durch eine Materialansammlung des Lichtleiters bereitgestellt, was zu einer größeren Dicke des Lichtleiters im Bereich des wenigstens einen Befestigungselements führt, oder durch wenigstens eine Aussparung bereitgestellt, wodurch der Lichtleiter im Bereich des Befestigungselements eine geringere Dicke als in angrenzenden Bereichen aufweist. Je nachdem, ob das jeweilige Befestigungselement durch eine Erhebung oder eine Ausnehmung an der Rückseite des Lichtleiters bereitgestellt ist, verhalten sich jeweilige Beeinflussungen des an der Sichtseite ausgekoppelten Lichtmusters. Insbesondere kann durch Wahl einer Form des Befestigungselements, einer Anzahl an vorzusehenden Befestigungselementen sowie einer Position der jeweiligen Befestigungselemente an der Rückseite das an der Vorderseite aus dem Lichtleiter ausgekoppelte Lichtmuster gezielt eingestellt werden. Das wenigstens eine Befestigungselement dient somit zum einen der Befestigung des Lichtleiters an der Kraftfahrzeugkomponente und zum anderen der Beeinflussung des Designs des von dem Lichtleiter ausgesandten Lichtmusters. Dadurch, dass an der Rückseite des Lichtleiters das wenigstens eine Befestigungselement angeordnet ist, kann der Lichtleiter besonders einfach an der Kraftfahrzeugkomponente befestigt und hierdurch die Interieureinrichtung besonders einfach hergestellt werden. Darüber hinaus ermöglicht die beschriebene Interieureinrichtung, dass ein Lichtdesign im Fahrzeuginnenraum mit besonders wenigen Komponenten bereitgestellt werden kann, da der Lichtleiter dazu ausgelegt ist, das ausgekoppelte Lichtmuster unmittelbar zum Betrachten von Fahrzeuginsassen bereitzustellen und keine weiteren Flächen für eine Reflexion des Lichts zum Umsetzen einer indirekten Beleuchtung benötigt werden.

In einer möglichen Weiterbildung der Erfindung ist es vorgesehen, dass an der Rückseite des Lichtleiters mehrere, in regelmäßigen Abständen zueinander angeordnete gleiche Befestigungselemente vorgesehen sind, wodurch bei bestimmungsgemäßer Einbaulage das auf der Sichtseite ausgekoppelte Lichtmuster eine regelmäßige Struktur aufweist. Über die mehreren Befestigungselemente kann zum einen ein besonders sicheres Halten des Lichtleiters an der Kraftfahrzeugkomponente sichergestellt werden und zum anderen eine besonders gleichmäßige Optik des an der Sichtseite ausgekoppelten Lichtmusters erreicht werden. Mittels der aufgrund der mehreren, in regelmäßigen Abständen angeordneten Befestigungselemente verursachten Optik des Lichtmusters kann gegebenenfalls die Kraftfahrzeugkomponente, an welcher der Lichthalter gehalten ist, zumindest bereichsweise kaschiert werden. Die Kraftfahrzeugkomponente kann somit durch den Lichtleiter hindurch besonders schwer bis gar nicht bei dem Betrachten der Sichtseite des Lichtleiters erkennbar sein.

In einer weiteren möglichen Ausgestaltung der Erfindung ist es vorgesehen, dass der Lichtleiter einteilig ausgebildet ist. Der Lichtleiter ist somit aus einem Stück hergestellt und besteht somit lediglich aus einem Teil. Dies ermöglicht, dass der Lichtleiter besonders einfach und schnell hergestellt werden kann, da keine Toleranzen mehrerer Bauteile zueinander auftreten beziehungsweise ausgeglichen werden müssen. Beispielsweise kann der Lichtleiter einteilig spritzgegossen werden. Die Befestigungselemente des Lichtleiters sind somit aus dem gleichen Material gebildet wie der Rest des Lichtleiters. Weiterhin kann aufgrund der Einteiligkeit eine besonders gleichmäßige Lichtleitung in dem Lichtleiter erreicht werden, da keine Grenzflächen innerhalb des Lichtleiters bestehen.

In einer weiteren möglichen Ausgestaltung der Erfindung ist es vorgesehen, dass die Interieureinrichtung als Drehknopf-Bedieneinrichtung ausgebildet ist. Mittels dieser Drehknopf-Bedieneinrichtung kann beispielsweise eine Kraftfahrzeugfunktion des Kraftfahrzeugs gesteuert werden. Über die Drehknopf-Bedieneinrichtung können Benutzereingaben von Fahrzeuginsassen des Kraftfahrzeugs, insbesondere vom Fahrer des Kraftfahrzeugs getätigt werden. Es ist vorgesehen, dass der Lichtleiter als Drehelement ausgebildet ist, welches zum Tätigen einer Benutzereingabe von einem Fahrzeuginsassen um eine Drehachse gedreht werden kann. Weiter ist es vorgesehen, dass die Kraftfahrzeugkomponente ein um die Drehachse drehbares Wälzlager ist. Darüber hinaus ist es vorgesehen, dass das wenigstens eine Befestigungselement eine Quetschrippe ist, über welche das auf das Wälzlager aufgesteckte Drehelement einen Reibschluss mit dem Wälzlager ausbildet, wodurch das Drehelement drehfest mit dem Wälzlager verbunden ist. Quetschrippen sind dazu eingerichtet, sich zu verformen, wodurch diese zuverlässig und über eine möglichst große Kontaktfläche an das Wälzlager angelegt werden können. Zusätzlich erzeugen die Quetschrippen Reibung zwischen dem Lichtleiter und der Kraftfahrzeugkomponente, insbesondere dem Wälzlager, wodurch der Drehknopf relativ zu dem Wälzlager an seinem Platz gesichert ist. Quetschrippen stellen eine schnelle und kostengünstige Methode dar, um den Drehknopf auf dem Wälzlager zu befestigen. Als Quetschrippen können beispielsweise halbkreisförmige Rippen mit einem Radius von zirka 0,8 Millimetern verwendet werden. Die Quetschrippen ermöglichen somit ein besonders einfaches und sicheres Zentrieren des Drehknopfs auf dem Wälzlager und ein besonders sicheres Halten des Drehknopfs auf dem Wälzlager. Darüber hinaus ermöglichen jeweilige Quetschrippen eine zumindest im Wesentlichen gestreifte Strukturierung des an der Sichtseite aus dem Lichtleiter ausgekoppelten Lichtmusters.

In diesem Zusammenhang kann es insbesondere vorgesehen sein, dass das Drehelement eine Mehrzahl von in regelmäßigen Abständen über den Umfang um die Drehachse verteilt angeordneten Quetschrippen aufweist. Diese mehreren Quetschrippen ermöglichen einen besonders großen Reibkontakt zwischen dem Drehelement und dem Wälzlager, wodurch das Drehelement besonders sicher an dem Wälzlager gehalten ist. Darüber hinaus ermöglicht die gleichmäßig verteilte Anordnung der Quetschrippen über den Umfang des Drehelements ein sicheres Zentrieren des Drehelements zu der Drehachse. Eine ungewünschte exzentrische Anordnung des Drehelements zu der Drehachse des Wälzlagers kann somit verhindert werden. Insbesondere kann es vorgesehen sein, dass das Drehelement zirka 32 Quetschrippen aufweist, welche in gleichmäßigen Abständen um die Drehachse verteilt über den Umfang des Drehelements angeordnet sind.

In einer weiteren möglichen Ausgestaltung der Erfindung ist es vorgesehen, dass die wenigstens eine Quetschrippe mit ihrer Längserstreckungsrichtung in axialer Richtung der Drehachse verläuft. Das bedeutet, dass die Quetschrippe mit ihrer Längserstreckungsrichtung parallel zur Drehachse verläuft. Hierdurch ergibt sich eine Streifenstruktur des an der Sichtseite ausgekoppelten Lichtmusters mit parallel zur Drehachse verlaufenden Streifen. Durch diese Ausgestaltung kann der Fahrzeuginsasse intuitiv besonders einfach erkennen, wo die Drehachse verläuft, um welche das Drehelement für das Steuern der Kraftfahrzeugfunktion zu drehen ist. Infolgedessen kann sich der Fahrer beim Bedienen der Drehknopfbedieneinrichtung besonders gut auf das Steuern des Kraftfahrzeugs konzentrieren, wodurch eine besonders hohe Verkehrssicherheit erreicht wird.

In einer weiteren möglichen Ausgestaltung der Erfindung ist es vorgesehen, dass ein Querschnitt der wenigstens einen Quetschrippe in Abhängigkeit von einem bei bestimmungsgemäßer Einbaulage an der Sichtseite zu erzeugenden Lichtmuster gewählt wird. Ein harter Übergang bezüglich der Anbindung des zumindest teilkreisförmigen Querschnitts der Quetschrippe zu einer Restwandstärke des Lichtleiters führt zu deutlich abgegrenzten Linien in der Struktur des an der Sichtseite ausgekoppelten Lichtmusters. Diese Linien der Struktur des Lichtmusters können aufgeweicht und somit mit dem restlichen Lichtmuster verblendet werden, indem ein weicher Übergang von dem zumindest teilkreisförmigen Querschnitt der jeweiligen Quetschrippe auf die Restwandstärke des Lichtleiters gewählt wird. Darüber hinaus kann eine Breite der jeweiligen Streifen des Lichtmusters an der Sichtseite über eine jeweilige Breite der Quetschrippen, insbesondere einen Durchmesser des zumindest teilkreisförmigen Querschnitts der jeweiligen Quetschrippe, gewählt werden. Eine Leuchtintensität der jeweiligen Streifen in dem Lichtmuster kann durch Auswahl der jeweiligen Tiefe des Querschnitts der jeweiligen Quetschrippe eingestellt werden beziehungsweise über den Radius des zumindest teilkreisförmigen Querschnitts. Mit anderen Worten wird der Querschnitt der jeweiligen Quetschrippe derart gewählt, dass eine vorgegebene Struktur des Lichtmusters an der Sichtseite bei bestimmungsgemäßer Nutzung erzielt werden kann. Hierdurch kann beispielsweise eine Struktur des Lichtmusters erreicht werden, welche ein besonders gutes Kaschieren der zumindest bereichsweise von dem Lichtleiter überdeckten Kraftfahrzeugkomponente ermöglicht.

Die Erfindung betrifft des Weiteren ein Kraftfahrzeug, insbesondere einen Kraftwagen, insbesondere einen Personenkraftwagen, mit einer Interieureinrichtung, wie sie bereits im Zusammenhang mit der erfindungsgemäßen Interieureinrichtung beschrieben worden ist. Hierbei ist die Sichtseite des Lichtleiters dem Innenraum zugewandt angeordnet und die Sichtseite des Lichtleiters wird von keiner Kraftfahrzeugkomponente des Kraftfahrzeugs vollständig zum Innenraum hin überdeckt. Das bedeutet, dass zumindest ein Bereich der Sichtseite des Lichtleiters unmittelbar von Fahrzeuginsassen des Kraftfahrzeugs gesehen werden kann. Das Lichtmuster kann somit mittels besonders weniger Komponenten im Kraftfahrzeug bereitgestellt werden.

Weitere Merkmale der Erfindung können sich aus der nachfolgenden Figurenbeschreibung sowie anhand der Zeichnung ergeben. Die vorstehend in der Beschreibung genannten Merkmale und Merkmalskombinationen sowie die nachfolgend in der Figurenbeschreibung und/oder in den Figuren allein gezeigten Merkmale und Merkmalskombinationen sind nicht nur in der jeweils angegebenen Kombination, sondern auch in anderen Kombinationen oder in Alleinstellung verwendbar, ohne den Rahmen der Erfindung zu verlassen.

Die Zeichnung zeigt in:
- Fig. 1: eine schematische Perspektivansicht einer Drehknopf-Bedieneinrichtung;
- Fig. 2: eine schematische Schnittansicht eines Lichtleiters der Drehknopf-Bedieneinrichtung in einer ersten Ausführungsform; und
- Fig. 3: eine schematische Schnittansicht des Lichtleiters in einer zweiten Ausführungsform.

Gleiche oder funktionsgleiche Elemente sind in den Figuren mit den gleichen Bezugszeichen versehen.

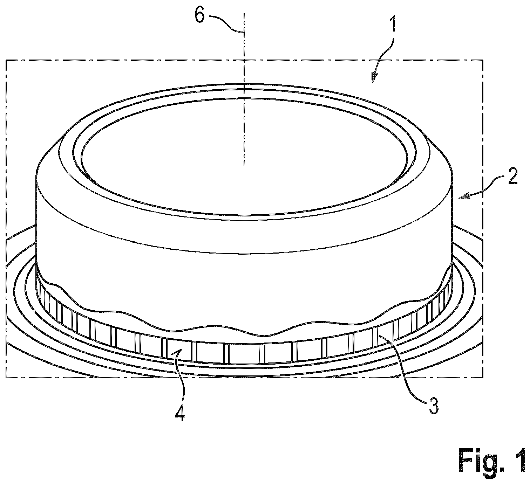

In Fig. 1 ist eine Drehknopf-Bedieneinrichtung 1 dargestellt. Bei dieser Drehknopf-Bedieneinrichtung 1 handelt es sich um eine Interieureinrichtung für einen Innenraum eines Kraftfahrzeugs, insbesondere eines Kraftwagens. Die Drehknopf-Bedieneinrichtung 1 ist dazu eingerichtet, eine Benutzereingabe von einem Fahrzeuginsassen des Kraftfahrzeugs zu empfangen, wobei in Abhängigkeit von der empfangenen Benutzereingabe eine Fahrzeugfunktion des Kraftfahrzeugs gesteuert wird. Die Drehknopf-Bedieneinrichtung 1 umfasst einen Drehschalter 2, mit einem Drehelement, welches aus einem Lichtleiter 3 besteht. Dieser Lichtleiter 3 ist einteilig ausgebildet und zum Leiten von Licht ausgebildet. Der Lichtleiter 3 weist eine Sichtseite 4 und eine der Sichtseite 4 gegenüberliegende Rückseite 5 auf. Bei bestimmungsgemäßer Einbaulage der Drehknopf-Bedieneinrichtung 1 in dem Kraftfahrzeug wird Licht über die Sichtseite 4 des Lichtleiters 3 aus dem Lichtleiter 3 ausgekoppelt. Weiterhin ist bei bestimmungsgemäßem Einbau der Drehknopf-Bedieneinrichtung 1 die Sichtseite 4 des Lichtleiters 3 im Innenraum des Kraftfahrzeugs sichtbar.

Der Drehschalter 2 ist dazu eingerichtet, für das Tätigen der Benutzereingabe von einem Fahrzeuginsassen um eine Drehachse 6 gedreht zu werden. Um dieses Drehen des Drehschalters 2 um die Drehachse 6 zu ermöglichen, umfasst die Drehknopf-Bedieneinrichtung 1 zusätzlich zu dem Drehschalter 2 ein in den Fig. nicht dargestelltes Wälzlager als weitere Kraftfahrzeugkomponente. An dem Wälzlager ist der Lichtleiter 3 gehalten. Das Wälzlager ist ebenfalls um die Drehachse 6 drehbar. Dadurch, dass der Drehschalter 2 drehfest an dem Wälzlager befestigt ist, werden beim Betätigen der Drehknopf- Bedieneinrichtung 1 der Lichtleiter 3 und das Wälzlager gemeinsam um die Drehachse 6 gedreht zum Tätigen der Benutzereingabe. Der Drehschalter 2 ist über die Quetschrippen 7 des Lichtleiters 3 insbesondere an einem Kugellager aus Metall als Wälzlager befestigt.

Um ein besonders sicheres drehfestes Halten des Lichtleiters 3 an dem Wälzlager sicherzustellen, ist es vorgesehen, dass der Lichtleiter 3 an seiner Rückseite 5 wenigstens ein Befestigungselement, insbesondere mehrere Befestigungselemente, aufweist. Vorliegend sind die jeweiligen Befestigungselemente als Quetschrippen 7 ausgebildet. Vorliegend sind an der Rückseite 5 des Lichtleiters 3 mehrere, in regelmäßigen Abständen zueinander angeordnete, in ihren Abmessungen gleich ausgebildete Quetschrippen 7 angeordnet. Die Quetschrippen 7 verlaufen mit ihrer Längserstreckungsrichtung in Erstreckungsrichtung der Drehachse 6.

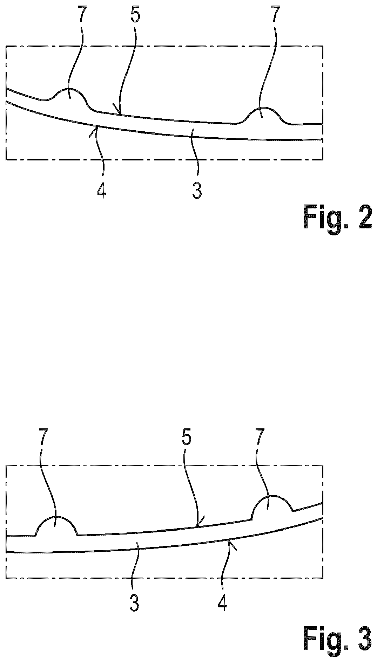

In den Fig. 2 und 3 ist der Lichtleiter 3 ausschnittsweise in einem senkrecht zur Drehachse 6 verlaufenden Querschnitt dargestellt, wobei in Fig. 2 die Quetschrippen 7 in einer ersten Ausführungsform mit weichen Übergängen gezeigt sind und in Fig. 3 die Quetschrippen 7 in einer zweiten Ausführungsform mit harten Übergängen gezeigt sind. Wie in den Fig. 2 und 3 besonders gut erkannt werden kann, weist der Lichtleiter 3 im Bereich der Quetschrippen 7 eine größere Dicke auf als in einem an die Quetschrippen 7 angrenzenden Bereich. Durch diese Materialansammlung des Lichtleiters 3 im Bereich der Quetschrippen 7 werden durch die Quetschrippen 7 Lichtstreueigenschaften des Lichtleiters 3 beeinflusst, wodurch aufgrund der Quetschrippen 7 an der Sichtseite 4 eine von einer Geometrie und einer Anordnung der Quetschrippen 7 abhängige Strukturierung eines von dem Lichtleiter 3 an der Sichtseite 4 ausgekoppelten Lichtmusters erkennbar ist.

Wie in den Fig. 2 und 3 erkannt werden kann, weisen die Quetschrippen 7 vorliegend einen zumindest im Wesentlichen halbkreisförmigen Querschnitt auf. Da bei der beschriebenen Drehknopf-Bedieneinrichtung 1 das Lichtmuster von dem Lichtleiter 3 bereitgestellt wird und darüber hinaus über die Quetschrippen 7 des Lichtleiters 3 der Drehschalter 2 am Wälzlager gehalten ist, kann die Drehknopf-Bedieneinrichtung 1 mit besonders wenigen Komponenten bereitgestellt werden. Bei dem beschriebenen Lichtleiter 3 ist eine transparente Blende, welche den Lichtleiter 3 zum Innenraum des Kraftfahrzeugs hin überdeckt, nicht vorgesehen. Der Lichtleiter 3 kann insbesondere milchig ausgestaltet sein. Bei bestimmungsgemäßer Verwendung kann der Lichtleiter 3 Licht unterschiedlicher Farben, insbesondere 30 unterschiedliche Farben, bereitstellen.

Insgesamt zeigt die Erfindung ein Quetschrippen-Lichtleiterdesign.

### Bezugszeichenliste

- 1: Drehknopf-Bedieneinrichtung
- 2: Drehschalter
- 3: Lichtleiter
- 4: Sichtseite
- 5: Rückseite
- 6: Drehachse
- 7: Quetschrippe

## Patentansprüche

1. Interieureinrichtung für einen Innenraum eines Kraftfahrzeugs, mit
- einem zum Leiten von Licht ausgebildeten Lichtleiter (3), welcher eine Sichtseite (4) und eine der Sichtseite (4) gegenüberliegende Rückseite (5) aufweist, wobei bei bestimmungsgemäßer Einbaulage der Interieureinrichtung über die Sichtseite (4) Licht aus dem Lichtleiter (3) ausgekoppelt wird und die Sichtseite (4) des Lichtleiters (3) im Innenraum sichtbar ist, wobei der Lichtleiter (3) an der Rückseite (5) wenigstens ein Befestigungselement (7) aufweist, durch dessen Struktur ein an der Sichtseite (4) ausgekoppeltes Lichtmuster vorgegeben ist, und
- einer Kraftfahrzeugkomponente, an welcher der Lichtleiter (3) über das Befestigungselement (7) gehalten ist.

2. Interieureinrichtung nach Anspruch 1, wobei an der Rückseite (5) des Lichtleiters (3) mehrere, in regelmäßigen Abständen zueinander angeordnete gleiche Befestigungselemente (7) vorgesehen sind, wodurch bei bestimmungsgemäßer Einbaulage das auf der Sichtseite (4) ausgekoppelte Lichtmuster eine regelmäßige Struktur aufweist.

3. Interieureinrichtung nach Anspruch 1 oder 2, wobei der Lichtleiter (3) einteilig ausgebildet ist.

4. Interieureinrichtung nach einem der vorhergehenden Ansprüche, wobei die Interieureinrichtung als Drehknopf-Bedieneinrichtung (1) ausgebildet ist, der Lichtleiter (3) als Drehelement (2) ausgebildet ist, welches zum Tätigen einer Benutzereingabe von einem Fahrzeuginsassen um eine Drehachse (6) gedreht werden kann, die Kraftfahrzeugkomponente ein um die Drehachse (6) drehbares Wälzlager ist und das wenigstens eine Befestigungselement (7) eine Quetschrippe (7) ist, über welche das auf das Wälzlager aufgesteckte Drehelement (2) einen Reibschluss mit dem Wälzlager ausbildet, wodurch das Drehelement (2) drehfest mit dem Wälzlager verbunden ist.

5. Interieureinrichtung nach Anspruch 4, wobei das Drehelement (2) eine Mehrzahl von in regelmäßigen Abständen über den Umfang um die Drehachse (6) verteilt angeordneten Quetschrippen (7) aufweist.

6. Interieureinrichtung nach Anspruch 4 oder 5, wobei die wenigstens eine Quetschrippe (7) mit ihrer Längserstreckungsrichtung in axialer Richtung der Drehachse (6) verläuft.

7. Interieureinrichtung nach einem der Ansprüche 4 bis 6, wobei ein Querschnitt der wenigstens einen Quetschrippe (7) in Abhängigkeit von einem bei bestimmungsgemäßer Einbaulage an der Sichtseite (4) zu erzeugenden Lichtmuster gewählt ist.

8. Kraftfahrzeug, mit einer Interieureinrichtung nach einem der vorhergehenden Ansprüche, wobei die Sichtseite (4) dem Innenraum zugewandt ist und die Sichtseite von keiner Kraftfahrzeugkomponente vollständig zum Innenraum hin überdeckt wird.
